**Europäisches Patentamt**

**European Patent Office**

**Office européen des brevets**

(19)

(11) Veröffentlichungsnummer : **0 017 620**
**B1**

(12) # EUROPÄISCHE PATENTSCHRIFT

(45) Veröffentlichungstag der Patentschrift :
**15.12.82**

(51) Int. Cl.³ : **B 60 Q   1/30**

(21) Anmeldenummer : **80810101.8**

(22) Anmeldetag : **24.03.80**

(54) **Klappbare Ladebordwand für Fahrzeuge mit Rückstrahler oder Warnblinker.**

(30) Priorität : **05.04.79 DE 2913637**

(43) Veröffentlichungstag der Anmeldung :
**15.10.80 (Patentblatt 80/21)**

(45) Bekanntmachung des Hinweises auf die Patenterteilung : **15.12.82 Patentblatt 82/50**

(84) Benannte Vertragsstaaten :
**AT BE CH DE FR IT NL SE**

(56) Entgegenhaltungen :
**DE B 1 032 680**
**DE C 1 007 194**
**DE U 7 500 288**
**US A 2 749 431**
**US A 3 331 957**

(73) Patentinhaber : **Schweizerische Aluminium AG**
**CH-8212 Neuhausen am Rheinfall (CH)**

(72) Erfinder : **Maier, Peter**
**Oberstrasse 28**
**D 7703 Worblingen (DE)**

EP 0 017 620 B1

Klappbare Ladebordwand für Fahrzeuge und Rückstrahler oder Warnblinker

Die Erfindung betrifft eine klappbare Ladebordwand für Fahrzeuge, insbesondere durch Huborgane klappbare Ladebordwand für Lastkraftwagen, mit in ihrem Klappbereich angeordneten Reflektoren, Blinkorganen od. dgl., deren Reflektions- oder Blinkfläche vom Fahrzeug weg gerichtet ist. Eine solche Anordnung ist z.B. aus der DE-U- 7 500 288 bekannt.

Ladebordwände stellen insbesondere dann eine Gefahr für andere Verkehrsteilnehmer dar, wenn sie in einer vom Fahrzeug abgeklappten Stellung auch während eines Transportes verbleiben, vor allem dann, wenn die Plattform bzw. Ladebordwand in etwa 150 cm Höhe horizontal von der Hinterkante des Fahrzeuges abragt ; die Kragweite kann dann bis zu 200 cm betragen. Es hat sich gezeigt, dass insbesondere Zweiradfahrer, welche sich von hinten oder von der Seite dem Fahrzeuge nähern, die abgeklappte Ladebordwand leicht übersehen, die lediglich als etwa 30 mm breiter Querstreifen erscheint. Eine Kollision mit einer abgeklappten Ladebordwand führt zumeist zu erheblichen Verletzungen. Am Fahrzeug selbst oder an der Ladebordwand fest montierte Reflektoren haben den Nachteil, den Ladebetrieb erheblich zu behindern und selbst zerstörungsanfällig zu bleiben.

Angesichts dieser Gesichtspunkte hat sich der Erfinder das Ziel gesetzt, eine Ladebord- oder Klappwand der eingangs erwähnten Art zu schaffen, welche in allen möglichen Gebrauchsstellungen deutlich sichtbar ist und deren Reflektoren, Blinkorgane od. dgl. einer Zerstörung durch den normalen Ladebetrieb entzogen sind.

Zur Lösung dieser Aufgabe führt, dass an der Ladebordwand als zweiarmige Pendelkörper ausgebildete Tragelemente für die Reflektoren, Blinkorgane od. dgl. vorgesehen und letztere in zur Fahrbahn geneigter Stellung und/oder paralleler Lage der Ladebordwand durch den Einfluss der Schwerkraft aus der Fläche der Ladebordwand herausschwenkbar sind. Dabei ist das als Pendelkörper ausgebildet Tragelement vorzugsweise an der Ladebordwand mittels eines in dieser verlaufenden Achsbolzens od. dgl. drehbar gelagert, gegebenenfalls unter Zwischenschaltung eines Kugellagers.

Nach einem weiteren Merkmal der Erfindung ist der Pendelkörper in einer Ausnehmung der Ladebordwand mittels eines in dieser verlaufenden Achsbolzens od. dgl. drehbar gelagert, wobei die Stellung des Pendelkörpers von einer durch den Achsbolzen gelegten Schwerkraftlinie bestimmt ist.

Dank dieser Massgaben bleibt der am Pendelkörper festgelegte Reflektor od. dgl. stets im Blickfeld eines herannahenden Verkehrsteilnehmers ; bei geschlossener Ladebordwand liegt er dieser bzw. dem Fahrzeug an und wird vom Fahrzeugrahmen oder einem entsprechenden Aufbauteil festgelegt, so dass ein Ausschwenken und Klappen während der Fahrt verhindert wird ; im Schwenkbereich ist der Reflektor oder das Blinkorgan am von der Ladebordwand abstehenden Pendelkörper gut sichtbar. Je nach Wahl und Ausgestaltung der Reflektoren und Blinkorgane am Pendelkörper können diese zusätzlich als stets sichtbare Seitenbegrenzungsrückstrahler dienen.

Als besonders günstig hat es sich erwiesen, dass der Pendelkörper beidseits des Achsbolzenlagers unterschiedliche Längen aufweisende Pendelkörperabschnitte besitzt und an jedem Abschnitt mit wenigstens einem Reflektor, Blinkorgan od. dgl. versehen ist sowie aussermittig gelagert ist. Die Reflektoren od. dgl. dieses Pendelkörpers sind in geneigter oder Bodenparalleler Lage der Ladebordwand an deren beiden Flächen, also an der Ober- und der Unterseite der Plattform, sichtbar — der beschriebene, 30 mm schmale gefährliche Querstreifen ist also ersetzt durch ein von der Länge der Pendelkörper abhängiges Reflektorband, das gegebenenfalls von erheblicher Breite sein kann.

Um eine Zerstörung der Reflektoren od. dgl. in einer unteren Arbeitslage hintanzuhalten, in welcher die Ladebordwand dem Boden aufliegt, soll der Reflektor bzw. der Pendelkörper bei Bodenberührung in die Ladebordwand zurückgeführt werden und an der Oberseite überfahrbar bzw. begehbar sein. Hierzu dient, dass der Pendelkörper bodenwärts eine aufwärts gekrümmte Stirnfläche als Abrollfläche für eine in die Bewegungsbahn des Pendelkörpers einragende Auflagefläche aufweist sowie gegebenenfalls eine Druckfläche, welche in der unteren Arbeitsstellung der Auflagefläche aufliegt. Hierbei soll diese Druckfläche in einer von den Auflagestellen der Ladebordwand auf der Auflagefläche bestimmten Ebene angeordnet sein, während gleichzeitig die Rückenfläche des Pendelkörpers in der Trittebene der Ladebordwand liegt und diese ergänzt. Mit dieser Massgabe ist gewährleistet, dass die Pendelkörper weder in der unteren Arbeitsstellung der Ladebordwand aus dieser herausragen noch in der Schliessstellung.

Im Rahmen der Erfindung liegt es, dass der Pendelkörper aussermittig gelagert ist und gegebenenfalls die beiden Pendelkörperabschnitte des Doppelpendels unterschiedliche Längen aufweisen.

Ausserdem kann vorteilhafterweise am Pendelkörper wenigstens ein zusätzliches Gewicht vorgesehen sein.

Erfindungsgemäss ist ein Pendelkörper als Teil eines stranggepressten Profiles besonders vorteilhaft, in dem Einformungen vorgesehen sind zur Aufnahme der Reflektoren, Blinkorgane und/oder des Gewichtes. Dabei sollen letztere von der bereits erwähnten Druckfläche überragt und somit geschützt werden. Als besonders günstig hat es sich erwiesen, die Reflektoren, Blinkorgane od. dgl. zur Rückenfläche des Pendelkörpers geneigt verlaufen zu lassen, und zwar in einem spitzen Winkel. Werden statt der Reflektoren oder zusätzlich zu ihnen Blinkorgane verwendet, so können diese nach einem weiteren Merkmal der Erfindung mit einem Neigungsschalter verbunden werden, welcher bei einer bestimmten Neigung der Ladebordwand den Stromkreis schaltet und das Blinklicht mit Strom beaufschlagt. Hierzu hat sich eine Neigung von 30° als besonders günstig gezeigt.

Um ein Schalten bei Erschütterungen im Fahrbetrieb zu vermeiden, wird noch eine Relais-Verzögerungsschaltung eingefügt.

Ausführungsbeispiele der Erfindung ergeben sich aus der nachfolgenden Beschreibung sowie anhand der Zeichnung ; diese zeigt in :

Figur 1   eine Schrägsicht auf einen Lastkraftwagen mit geöffneter heckwärtiger Ladebordwand ;

Figur 2   einen vergrösserten Schnitt durch Bordwand gemäss Linie II-II in Fig. 1 in drei verschiedenen Stellungen A, B, C ;

Figur 3   die entsprechend Fig. 2 geschnittene Ladebordwand in ihrer unteren Arbeitsstellung ;

Figur 4   einen vergrösserten Detailschnitt durch die Ladebordwand.

Ein Lastkraftwagen 1 mit Kastenaufbau 2 weist eine diesen heckwärts schliessende und mittels hydraulischer Huborgane 3 um eine Achslinie M in Pfeilrichtung x and den Kastenaufbau 2 heranführbare Ladebordwand 4 auf.

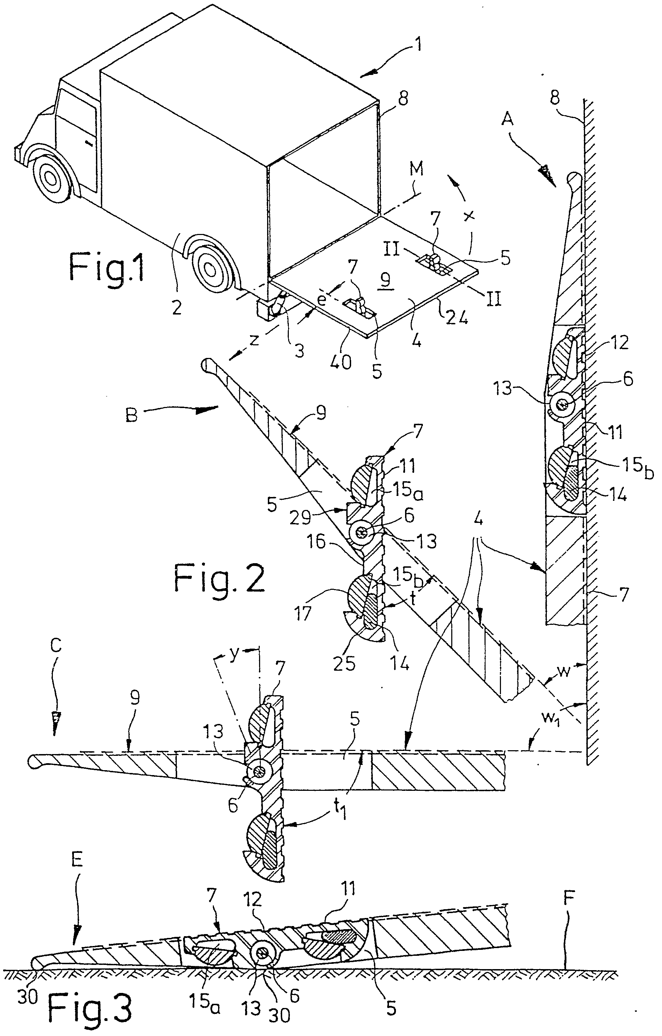

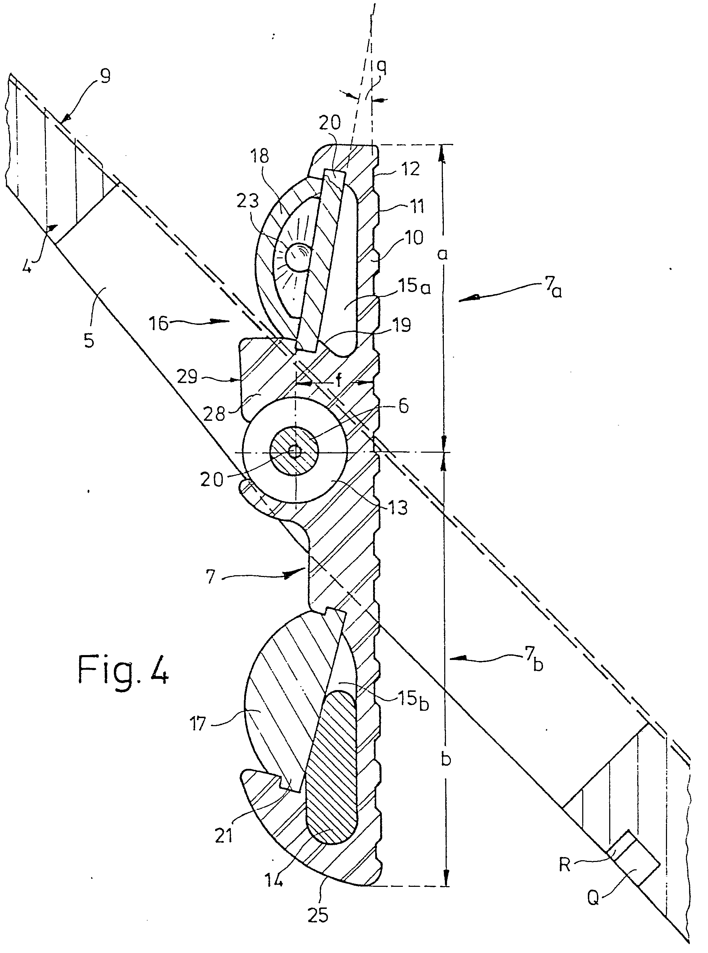

In schlitzartigen Ausnehmungen 5 der Ladebordwand 4 sind an — zur Achslinie M parallelen — Achsbolzen 6 Pendelkörper 7 gelagert. Der Abstand e jener Ausnehmung 5 von der benachbarten Bordwandkante 40 soll sehr gering sein und ist in Fig. 1 lediglich der besseren Uebersicht halber weit gewählt. Die Pendelkörper 7 sind so mit dem jeweiligen Achsbolzen 6 verbunden, dass sie sich stets lotrecht zur Fahrbahn F des Lastkraftwagens 1 einzustellen trachten und damit bei horizontaler Fahrbahn F auch parallel zu dem dann lotrechten Fahrzeugrahmen 8 stehen. Dies verdeutlicht insbesondere Fig. 2 mit drei unterschiedlichen Stellungen der Ladebordwand 4, in der vertikalen Schliessstellung A liegt jene dem Fahrzeugrahmen 8 an ; ihre Lauf- oder Trittebene 9 fluchtet dabei mit den Kammflächen 11 von Rippen 10 (Fig. 4), die von der zum Fahrzeugrahmen 8 weisenden Innenfläche 12 des Pendelkörpers 7 abragen ; beispielsweise bilden in der von einem Neigungswinkel w bestimmten mittleren Schräglage B die Trittebene 9 und die Kammflächen 11 einen Winkel t von dazu ebenfalls 45°, in oberer Arbeitslage C messen beide Winkel $w_1$, $t_1$ 90°.

Die beschriebene Schwenkbewegung der Pendelkörper 7 wird zum einen durch die unterschiedlichen Längen a, b der vom Lager 13 für den Achsbolzen 6 bestimmten Pendelkörperabschnitte $7_a$, $7_b$ (Fig. 4) erreicht und zum anderen unterstützt von einem Gewicht 14, beispielsweise einem Bleikörper, im längeren Pendelkörperabschnitt $7_b$. Zudem ist der Achsbolzen 6 im Abstand f von der Innenfläche 12 exzentrisch ausserhalb der Längsachse des Pendelkörpers 7 gelagert.

Das Gewicht 14 sitzt in einer Einformung $15_b$ des längeren Pendelkörperabschnittes $7_b$. Diese Einformung $15_b$ und eine entsprechende Einformung $15_a$ im kürzeren Pendelkörperabschnitt $7_a$ sind in den Pendelkörper 7 von dessen sog. Sichtseite 16 her eingebracht. In beiden Einformungen 15 sitzen Reflektoren 17 und/oder Blinkleuchtkörper 18 ; in der Seitenwand 19 der Einformungen 15 ist eine Rastnut 20 für einen Rastkragen 21 des Reflektors 17 bzw. des Blinkleuchtkörpers 18 zu erkennen. Die Reflektoren 17 bzw. Blinkleuchtkörper 18 — und damit auch die Rastnuten 20 — sind zur Innenfläche 12 der Pendelkörper 7 in einem spitzen Winkel q von etwa 10° geneigt.

Bei einer in der Zeichnung nicht hervorgehobenen Ausführungsform sind die Reflektoren 17 bzw. Blinkleuchtkörper 18 so angeordnet oder ausgebildet, dass sie auch zur Fahrzeugseite hin (Blinkrichtung z in Fig. 1) eine Signalfunktion erfüllen. Die Kraftzufuhr für den/die Blinkleuchtkörper 18 erfolgt durch Kabel, die den Achsbolzen 6 im Bereich einer axialen Bohrung 20 durchsetzen und an einen Quecksilberschalter Q od. dgl. angeschlossen sind ; dieser soll das Blinklicht 23 im Blinkleuchtkörper 18 bei einem Neigungswinkel w der Laderbordwand 4 von etwa 30° einschalten. Zudem ist eine — in der Zeichnung übersichtlichkeitshalber nur symbolisch angedeutete — Relais-Verzögerungsschaltung R angeschlossen, um ein Schalten bei Erschütterungen im Fahrbetrieb auszuschliessen.

In horizontaler Arbeitslage C (Fig. 2) der Laderbordwand 4 beträgt der maximale Pendelausschlag y dank dann wirksam werdender, in der Zeichnung nicht wiedergegebener Anschlagorgane etwa 20°.

Wird die Ladebordwand 4 in ihre untere Arbeitsstellung E (Fig. 3) abgesenkt, rollt die untere — querschnittlich zur Endkante 24 der Ladebordwand 4 hin aufwärts gekrümmte — Stirnfläche 25 des Pendelkörpers 7 auf der Fahrbahn F ab, so dass letzterer unversehrt in seine Wandausnehmung 5 zurückgeführt wird.

Es wird deutlich, dass die Pendelkörper 7 in dieser unteren Arbeitsstellung E ohne weiteres von einem die Trittebene 9 der Ladebordwand 4 überfahrenden Fahrzeug kollisionsfrei überrollt werden kann.

Um ein Fluchten der Trittfläche 9 der Ladebordwand 4 mit den Kammflächen 11 des Pendelkörpers 7 auch in der unteren Arbeitsstellung E zu gewährleisten, ist der Pendelkörper 7 an seiner Aussen- oder Sichtseite 16 mit einer Drucknase 28 ausgestattet, welche beim Absenken der Ladebordwand 4 die Fahrbahn F berührt und dieser mit einer Druckfläche 29 aufliegt. Letztere verläuft dann in einer Ebene, die von den Auflagestellen 30 (Fig. 3) der Ladebordwand 4 bestimmt ist.

**Ansprüche**

1. Klappbare Ladebordwand für Fahrzeuge, insbesondere durch Huborgane Klappbare Ladebordwand für Lastkraftwagen, mit in ihrem Klappbereich angeordneten Reflektoren, Blinkorganen od. dgl., deren Reflektions- oder Blinkfläche vom Fahrzeug weg gerichtet ist, dadurch gekennzeichnet, dass an der Ladebordwand (4) als zweiarmige Pendelkörper (7) ausgebildete Tragelemente für die Reflektoren (17), Blinkorgane (18) od. dgl. vorgesehen und letztere in zur Fahrbahn (F) geneigter Stellung (B) und/oder paralleler Lage (C) der Ladebordwand durch den Einfluß der Schwerkraft aus der Fläche der Ladebordwand herausschwenkbar sind.

2. Ladebordwand nach Anspruch 1, dadurch gekennzeichnet, dass der Pendelkörper (7) in einer Ausnehmung der Ladebordwand (4) mittels eines in dieser verlaufenden Achsbolzens (6) od. dgl. drehbar gelagert ist, wobei die Stellung des Pendelkörpers (7) von einer durch den Achsbolzen gelegten Schwerkraftlinie bestimmt ist.

3. Ladebordwand nach Anspruch 1 oder 2, dadurch gekennzeichnet, dass der Pendelkörper (7) beidseits des Achsbolzenlagers (13) unterschiedliche Längen (a, b) aufweisende Pendelkörperabschnitte ($7_a$, $7_b$) besitzt und an jedem Abschnitt mit wenigstens einem Reflektor (17), Blinkorgan (18) od. dgl. versehen ist, sowie aussermittig gelagert ist.

4. Ladebordwand nach wenigstens einem der Ansprüche 1 bis 3, dadurch gekennzeichnet, dass der Pendelkörper (7) bodenwärts eine aufwärts gekrümmte Stirnfläche (25) als Abrollfläche für eine in die Bewegungsbahn des Pendelkörpers einragende Auflagefläche od. dgl. aufweist.

5. Ladebordwand nach Anspruch 4, dadurch gekennzeichnet, dass der Pendelkörper (7) eine Druckfläche (29) aufweist, welche in einer unteren Arbeitsstellung, in der die Ladebordwand (4) die Auflagefläche (F) berührt, letzterer aufliegt, wobei die Druckfläche (29) die Reflektoren (17), Blinkorgane (18) od. dgl. überragt.

6. Ladebordwand nach Anspruch 4 oder 5, dadurch gekennzeichnet, dass die Druckfläche (29) in einer von den Auflagestellen (30) der Ladebordwand (4) auf der Auflagefläche (F) bestimmten Ebene und die Rückfläche (11) des Pendelträgers (7) in der Trittebene (9) der Ladebordwand angeordnet ist.

7. Ladebordwand nach wenigstens einem der Ansprüche 1 bis 6, dadurch gekennzeichnet, dass am Pendelkörper (7) wenigstens ein zusätzliches Gewicht (14) vorgesehen ist.

8. Ladebordwand nach wenigstens einem der Ansprüche 1 bis 7, dadurch gekennzeichnet, dass im Pendelkörper (7) von dessen vom Fahrzeug (1) weg weisenden Sichtfläche (16) aus Einformungen (15) vorgesehen und in diesen die Reflektoren (17), Blinkorgane (18) und/oder das Gewicht (14) eingefügt sind.

9. Ladebordwand nach wenigstens einem der Ansprüche 1 bis 8, dadurch gekennzeichnet, dass die Reflektoren (17), Blinkorgane (18) od. dgl. zur Innenfläche (12) des Pendelkörpers (7) geneigt (q) verlaufen und in der Seitenwandung (19) der Einformung (15) zumindest eine Rastnut (20) zur Aufnahme eines Gegengliedes (21) des Reflektors (17), Blinkorgans (18) od. dgl. vorgesehen ist.

10. Ladebordwand nach wenigstens einem der Ansprüche 1 bis 9, dadurch gekennzeichnet, dass das Blinkorgan (18) mit einem Neigungsschalter (Q) verbunden, der bei einer Neigung (w) der Ladebordwand (4) von mehr als 30° auslösbar ist, und dass im Stromkreis des Blinkorgans (18) eine Relais-Verzögerungsschaltung (R) vorgesehen ist.

**Claims**

1. Hinged tail gate for vehicles, especially a tail gate for goods vehicles which can be swung by lifting means, with reflectors, flashers, or the like arranged in its hinge zone, the reflecting or flashing surface of which faces away from the vehicle, characterised in that carrier elements for the reflectors (17), flashers (18) or the like, formed as a two-armed pendulum body (7) are provided on the tail gate (4), and these bodies can pivot out of the plane of the tail gate under the effect of gravity, when the tail gate is in inclined position (B) and/or parallel position (C) relative to the roadway (F).

2. Tail gate according to claim 1, characterised in that the pendulum body (7) is pivotally mounted in a recess of the tail gate (4) by means of a pivot pin (6) or the like lying in it, while the position of the pendulum body (7) is determined by a vertical line passing through the pivot bolt.

3. Tail gate according to claim 1 or 2, characterised in that the pendulum body (7) has pendulum body portions ($7_a$, $7_b$) of different length (a, b) on each side of the pivot bolt bearing (13), and is provided in each portion with at least one reflector (17), flasher (18) or the like, and is eccentrically pivoted.

4. Tail gate according to at least one of claims 1 to 3, characterised in that the pendulum body (7) at the lower end has an outwardly curved end surface (25) as a rolling surface for a support surface or the like extending into the path of the pendulum body.

5. Tail gate according to claim 4, characterised in that the pendulum body (7) has an abutment surface (29) which, in a lower working position, in which the tail gate (4) rests on the supporting surface (F), rests on the latter, while the abutment surface (29) projects beyond the reflectors (17), flashers (18) or the like.

6. Tail gate according to claim 4 or 5, characterised in that the abutment surface (29) is arranged in a plane determined by the place of support (30) of the tail gate (4) on the supporting surface (F), and the rear surface (11) of the pendulum support (7) is arranged in the plane of the walking surface (9) of the tail gate.

7. Tail gate according to at least one of claims 1 to 6, characterised in that at least one additional weight (14) is provided on the pendulum body (7).

8. Tail gate according to at least one of claims 1 to 7, characterised in that recesses (15) are provided in the visible surface (16) facing away from the vehicle (1), and the reflectors (17), flashers (18) and/or the weight (14) are introduced into them.

9. Tail gate according to at least one of claims 1 to 8, characterised in that the reflectors (17), flashers (18) or the like extend at an angle (q) to the inner surface (12) of the pendulum body (7), and at least one retaining groove (20) for reception of a cooperating member (21) of the reflector (17), flasher (18) or the like is provided in the side wall (19) of the recess (15).

10. Tail gate according to at least one of claims 1 to 9, characterised in that the flasher (18) is connected with a tilting switch (Q), which can be effective at an inclination (w) of the tail gate (4) of more than 30°, and that a relay delay switch (R) is provided in the circuit of the flasher (18).

**Revendications**

1. Plate-forme de levage pivotante pour véhicules, en particulier plate-forme de levage pivotant au moyen de vérins, pour camions, comportant des réflecteurs, feux, clignotants ou autres semblables disposés dans la partie pivotante et dont la surface de réflexion ou d'éclairage clignotant est dirigée vers l'extérieur du véhicule, caractérisée en ce qu'il est prévu sur la plate-forme de levage (4) des supports, ayant la forme d'éléments pendulaires à deux bras, pour les réflecteurs (17), les feux clignotants (18) ou autres semblables et que ces supports peuvent, sous l'influence de la pesanteur, pivoter pour sortir de la surface de la plate-forme de levage, lorsque cette plate-forme de levage est en position (B) par rapport à la chaussée (F) et/ou en position parallèle (C) à cette chaussée.

2. Plate-forme de levage selon la revendication 1, caractérisée en ce que l'élément pendulaire (7) est logé, avec possibilité de rotation, dans un évidement de la plate-forme de levage (4), au moyen d'un axe (6) disposé dans cet évidement, ou autre semblable, la position de l'élément pendulaire (7) étant déterminée par la direction de la pesanteur passant par cet axe.

3. Plate-forme de levage selon la revendication 1 ou la revendication 2, caractérisée en ce que l'élément pendulaire (7) comporte, des deux côtés du palier (13) de l'axe, des portions (7$_a$, 7$_b$)

qui présentent des longueurs différentes (a, b) ; et en ce qu'il comporte dans chaque portion au moins un réflecteur (17), feu clignotant (18) ou autre semblable, son axe de pivotement étant excentré.

4. Plate-forme de levage selon au moins une des revendications 1 à 3, caractérisée en ce que l'élément pendulaire (7) présente, côté sol, une surface frontale (25) courbe, le centre de courbure étant vers le haut, qui se déroule sur une surface d'appui, ou autre semblable venant se placer sur le chemin de l'élément pendulaire.

5. Plate-forme de levage selon la revendication 4, caractérisée en ce que l'élément pendulaire (7) présente une surface de reprise (29) qui, en position inférieure de travail, où la plate-forme de levage (4) vient au contact de la surface d'appui (F), vient s'appuyer sur cette dernière, la surface de reprise (29) venant en saillie par rapport aux réflecteurs (17), feux clignotants (18) ou autres semblables.

6. Plate-forme de levage selon la revendication 4 ou 5, caractérisée en ce que la surface de reprise (29) est disposée dans un plan défini par les points d'appui (30) de la plate-forme de levage (4) sur la surface d'appui (F) ; et en ce que la surface arrière (11) de l'élément pendulaire (7) est disposée dans le plan de circulation (9) de la plate-forme de levage.

7. Plate-forme de levage selon au moins une des revendications 1 à 6, caractérisée en ce que sur l'élément pendulaire (7) il est prévu au moins un poids supplémentaire (14).

8. Plate-forme de levage selon au moins l'une des revendications 1 à 7, caractérisée en ce que dans l'élément pendulaire (7) sont prévus des chambrages (15), depuis la surface vue (16) dirigée vers l'extérieur du véhicule (1) ; et en ce que dans ces chambrages sont insérés les réflecteurs (17), les feux clignotants (18) et/ou le poids (14).

9. Plate-forme de levage selon au moins l'une des revendications 1 à 8, caractérisée en ce que les réflecteurs (17), les feux clignotants (18) ou autres semblables sont inclinés (d'un angle q) par rapport à la surface interne (12) de l'élément pendulaire (7) ; et en ce que dans la paroi latérale (19) du chambrage (15) est prévue au moins une rainure de cantrage (20) pour recevoir un élément correspondant (21) du réflecteur (17), du feu clignotant (18) ou autre semblable.

10. Plate-forme de levage selon au moins l'une des revendications 1 à 9, caractérisée en ce que le feu clignotant (18) est relié à un interrupteur d'inclinaison (Q) qui peut se déclencher pour une inclinaison (w) de la plate-forme de levage (4) de plus de 30° ; et en ce que dans le circuit du feu clignotant (18) est prévu un interrupteur relais à retard (R).

Fig.1

Fig. 2

Fig.3

Fig. 4